# FASCICULE DE BREVET EUROPEEN

(11) **EP 1 156 595 B1**
(45) Date de publication et mention de la délivrance du brevet: **03.12.2008**
(21) Numéro de dépôt: 01401287.6
(22) Date de dépôt: 17.05.2001
(51) Int. Cl.: H04B 7/005

(54) **Procédé d'ajustement de puissance d'émission par des stations de base transmettant en macro-diversité**
Verfahren zur Sendeleistungsregelung für Feststationen in Macro-Diversity
Transmit power control for base stations in macro-diversity

(30) Priorité: 17.05.2000 FR 0006316
(43) Date de publication de la demande: 21.11.2001
(73) Titulaire: Alcatel Lucent, 75008 Paris (FR)
(72) Inventeur: Blanc, Patrick, 92130 Issy les Moulineaux (FR)
(74) Mandataire: El Manouni, Josiane

(56) Documents cités:
- WO-A-00/33480
- WO-A-99/31819
- WO-A-99/43100
- WO-A-99/52310
- US-A- 4 613 990

## Description

La présente invention concerne d'une manière générale les systèmes de radiocommunications mobiles, notamment les systèmes dits à accès multiple à répartition par les codes, ou AMRC, ou encore CDMA (pour "Code Division Multiple Access" en anglais).

La technique CDMA est notamment utilisée dans les systèmes dits de troisième génération, tels que notamment le système UMTS (pour "Universal Mobile Telecommunication System").

D'une manière générale, dans ces systèmes, un des objectifs est d'augmenter les performances, c'est-à-dire notamment augmenter la capacité et/ou améliorer la qualité de service.

Une technique couramment utilisée est la technique dite de contrôle de puissance en boucle fermée (ou "closed loop power control" en anglais).

Le but du contrôle de puissance en boucle fermée est de maintenir, pour chaque liaison entre une station de base et une station mobile, un paramètre représentatif de la qualité de transmission sur cette liaison (tel que par exemple le rapport signal-sur-interférence, ou SIR, pour "Signal-to-Interference Ratio" en anglais) le plus proche possible d'une valeur cible. Par exemple, dans le sens descendant (c'est-à-dire des stations de base vers les stations mobiles), une station mobile transmet à une station de base des commandes de contrôle de puissance destinées à réduire l'écart entre le SIR estimé par la station mobile et la valeur SIR cible. Pour une meilleure efficacité de cette boucle interne de contrôle de puissance, de telles commandes de contrôle de puissance sont transmises relativement fréquemment; à titre d'exemple, dans un système tel que l'UMTS, où les informations transmises sont structurées en trames, elles-mêmes structurées en intervalles de temps (ou « time-slots » en anglais) une commande de contrôle de puissance est transmise dans chaque intervalle de temps. La valeur cible peut elle-même être déterminée par une autre boucle de contrôle permettant de maintenir la qualité de service constante, cette deuxième boucle étant généralement dite boucle externe (ou "outer loop" en anglais), par opposition à la précédente, dite aussi boucle interne (ou "inner loop" en anglais).

Une autre technique couramment utilisée dans les systèmes CDMA est la technique dite de transmission en macro-diversité, ou encore "soft handover" (en anglais), selon laquelle une station mobile est connectée simultanément à plusieurs stations de base. Ceci permet, grâce à des techniques appropriées de traitement et de combinaison des différents signaux reçus de ces différentes stations de base par la station mobile (notamment au moyen d'un récepteur de type "Rake") d'améliorer les performances en réception, et aussi de minimiser les risques de perte d'appel lors de transferts inter-cellulaires, contrairement à la technique de "hard handover" selon laquelle une station mobile n'est connectée à chaque instant qu'à une seule station de base.

Généralement, dans le cas de transmission en macro-diversité, la boucle interne de contrôle de puissance dans le sens descendant est telle que la station mobile transmet à chaque instant une même commande de contrôle de puissance à chacune des stations de base auxquelles elle est connectée.

Dans le cas de transmission en macro-diversité, il est en outre connu d'ajuster les unes par rapport aux autres les puissances d'émission des différentes stations de base auxquelles la station mobile est connectée, de manière à optimiser les performances du système, notamment sa capacité. Ainsi, généralement, un contrôleur de stations de base (ou RNC, pour "Radio Network Controller" dans le système UMTS) détermine une puissance d'émission à un instant tₙ₊₁ pour chacune de ces stations de base, à partir des puissances d'émission à un instant tₙ reportées par chacune de ces stations de base. Avantageusement une même puissance d'émission est déterminée pour ces différentes stations de base.

La ou les valeurs de puissance d'émission ainsi déterminées (dites ici aussi puissance(s) d'émission de référence) sont ensuite signalées par le contrôleur de stations de base à ces différentes stations de base, qui ajustent alors leur puissance d'émission sur ces puissances d'émission de référence.

En outre le document WO 99/31819 propose que le contrôleur de stations de base signale à chaque station de base, en même temps qu'une valeur de puissance d'émission de référence, un instant dit de synchronisation (le même pour les différentes stations de base) afin de procéder à un ajustement des puissances d'émission simultanément dans ces différentes stations de base.

Une valeur initiale de puissance d'émission de référence peut être déterminée à chaque fois que, au gré des déplacements de la station mobile, une ou plusieurs stations de base sont ajoutées, ou retranchées, à un ensemble de stations de base auxquelles la station mobile est connectée (appelé aussi ensemble actif, ou "active set" en anglais). Une mise à jour de cette valeur de puissance d'émission de référence peut ensuite être nécessaire dans le cas de dérive par rapport à ce schéma initial, notamment dans le cas d'erreurs dans la transmission de commandes de contrôle de puissance selon la boucle interne de contrôle de puissance, qui font qu'une même commande de contrôle de puissance n'est plus transmise à chacune des stations de base de l'ensemble actif, auquel cas les différentes puissances d'émission ne sont plus correctement ajustées les unes par rapport aux autres.

Le document WO 99/31819 propose également, à chaque mise à jour de la valeur de puissance d'émission de référence, de signaler à chacune des stations de base, en même temps que la valeur de puissance d'émission de référence mise à jour, un instant de synchronisation.

Une telle solution a notamment pour inconvénient d'accroître de manière significative les échanges de signalisation à l'interface entre contrôleur de stations de base et stations de base (interface appelée aussi "lub" dans l'UMTS) et donc de ne pas utiliser efficacement les ressources de transmission disponibles sur cette interface.

La présente invention est basée sur une approche différente, permettant notamment d'éviter ces inconvénients.

Un des objets de présente invention est un procédé d'ajustement de puissance d'émission pour stations de base transmettant en macro-diversité dans un système de radiocommunications mobiles, ledit procédé étant essentiellement caractérisé en ce qu'une valeur de puissance d'émission de référence pour ledit ajustement est signalée à chacune desdites stations de base, avec une période d'ajustement, et en ce que chacune desdites stations de base ajuste périodiquement sa puissance d'émission sur ladite valeur de puissance d'émission de référence, selon ladite période d'ajustement.

En d'autres termes, suivant l'invention il n'est pas nécessaire de signaler relativement fréquemment des valeurs mises à jour de puissance d'émission de référence; il est seulement nécessaire de procéder régulièrement à des ajustements, même si ceux-ci sont effectués sur une dernière valeur signalée de puissance d'émission de référence, qui ne correspond pas nécessairement à une valeur actualisée. En effet, en partant d'un tel ajustement, la boucle interne de contrôle de puissance peut ensuite permettre de compenser relativement rapidement d'éventuels écarts par rapport à une telle valeur actualisée. Par conséquent, un gain significatif sur la quantité de signalisation nécessaire est obtenu, sans dégradation sensible des performances.

Avantageusement, lesdits ajustements effectués périodiquement sont effectués à des instants prédéterminés.

Ainsi, une synchronisation est obtenue pour les ajustements par les différentes stations de base, sans qu'il soit nécessaire de transmettre en outre des instants de synchronisation, et le gain qui en résulte sur la quantité de signalisation nécessaire est d'autant plus important.

Notamment, les informations transmises étant structurées en trames numérotées suivant une numérotation continue croissante, ladite période d'ajustement est exprimée en nombre N de trames, et lesdits instants prédéterminés correspondent aux trames de numéro n (modulo N), avec 0 ≤n < N.

Avantageusement, une valeur mise à jour de période d'ajustement peut être signalée.

Ainsi, le procédé suivant l'invention conserve la souplesse nécessaire, la période de validité pouvant être réduite ou accrue selon le cas, c'est-à-dire suivant que les ajustements ont besoin d'être effectués plus ou moins fréquemment.

Avantageusement, une valeur mise à jour de puissance d'émission de référence peut être signalée.

La présente invention a également pour objet un contrôleur de stations de base, ce contrôleur de stations de base étant essentiellement caractérisé en ce qu'il comporte, pour l'ajustement de puissances d'émission par des stations de base transmettant en macro-diversité dans un système de radiocommunications mobiles:
- des moyens pour signaler une valeur de puissance d'émission de référence pour ledit ajustement à chacune desdites stations de base, avec une période d'ajustement.

Suivant une autre caractéristique, ledit contrôleur de stations de base comporte :
- des moyens pour signaler une valeur mise à jour de période d'ajustement.

Suivant une autre caractéristique, ledit contrôleur de stations de base comporte :
- des moyens pour signaler une valeur mise à jour de puissance d'émission de référence.

La présente invention a également pour objet une station de base, cette station de base étant essentiellement caractérisée en ce qu'elle comporte, pour l'ajustement de sa puissance d'émission dans le cas de transmission en macro-diversité dans un système de radiocommunications mobiles:
- des moyens pour recevoir une valeur de puissance d'émission de référence pour ledit ajustement, transmise par un contrôleur de stations de base avec une période d'ajustement,
- des moyens pour ajuster périodiquement sa puissance d'émission sur ladite valeur de puissance d'émission de référence, selon ladite période d'ajustement.

La présente invention a également pour objet un système de radiocommunications mobiles, comportant des moyens pour mettre en oeuvre un procédé suivant l'invention.

D'autres objets et caractéristiques de la présente invention apparaîtront à la lecture de la description suivante d'une exemple de réalisation, faite en relation avec les dessins ci-annexés dans lesquels:
- la figure 1 rappelle l'architecture générale d'un système de radiocommunications mobiles,
- la figure 2 est un schéma destiné à illustrer un procédé suivant la présente invention,
- la figure 3 est un schéma destiné à illustrer le type de moyens à prévoir suivant l'invention dans une station de base (ou Node B dans un système tel que le système UMTS), et dans un contrôleur de stations de base (ou RNC pour un système tel que le système UMTS).

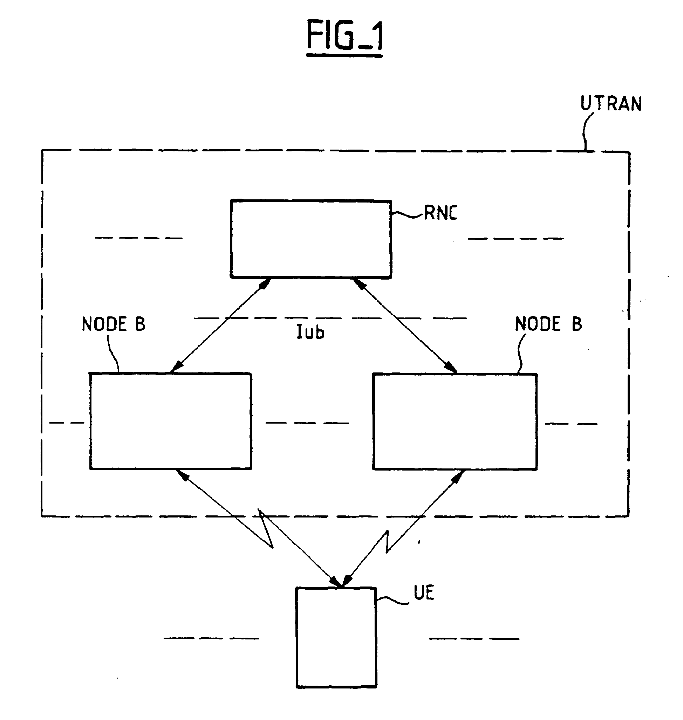

D'une manière générale, un système de radiocommunications mobiles comporte, comme rappelé sur la figure 1, un sous-système d'accès radio comportant lui-même des stations de base (appelées aussi "Node B" dans l'UMTS), et des équipements de contrôle de ces stations de base (appelés aussi RNC, pour "Radio Network Controller" dans l'UMTS). L'ensemble formé par les « Node B » et les RNC est aussi appelé UTRAN, pour "UMTS Terrestrial Radio Access Network". L'UTRAN est en relation d'une part avec avec des stations mobiles (appelées aussi équipements utilisateur, ou "User Equipment" ou encore UE dans l'UMTS), et d'autre part avec un sous-système de réseau et de commutation (non illustré spécifiquement).

A titre d'exemple, la figure 1 illustre un UE connecté à deux Node B selon la technique de transmission en macro-diversité. Comme rappelé dans ce qui précède, les puissances d'émission par ces différents Node B sont ajustées les unes par rapport aux autres, de manière à optimiser les performances du système, ces ajustements donnant lieu à des échanges de signalisation à l'interface, notée "lub", entre RNC et Node B.

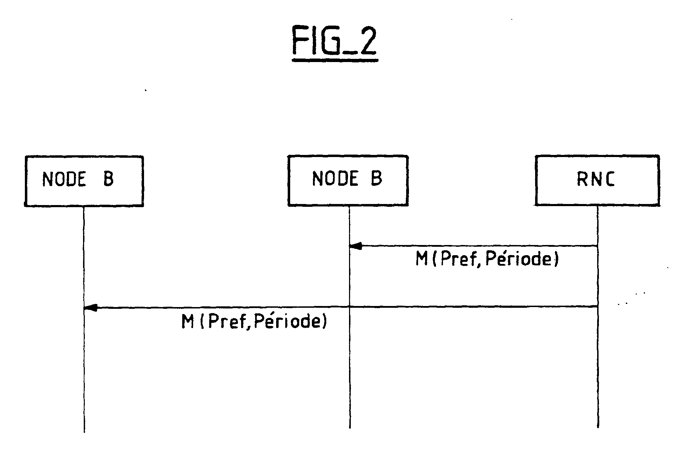

Un exemple de procédé selon l'invention est illustré sur la figure 2.

Le RNC transmet à chacun des Node B un message noté M de contrôle de puissance dans le sens descendant. Ce message contient en l'occurrence une valeur de puissance de référence notée Pref, et une période d'ajustement, notée Période. Chaque Node B recevant un tel message ajuste périodiquement sa puissance d'émission sur la valeur signalée de puissance d'émission de référence, selon la période d'ajustement signalée.

Comme rappelé précédemment, notamment pour l'UMTS, les informations transmises sur l'interface radio entre Node B et UE sont structurées en trames, elles-mêmes structurées en intervalles de temps (ou « time-slots » en anglais). Une trame dure 10ms et comporte 15 intervalles de temps, notés IT₀ à IT₁₄. En outre, chaque trame est repérée par un numéro de trame, les numéros de trames étant attribués suivant une numérotation continue croissante.

A titre d'exemple la période d'ajustement est exprimée en nombre N de trames. Par exemple si N est égal à 4, les ajustements sont effectués toutes les 4 trames.

Les ajustements sont par exemple effectués à des instants prédéterminés, ces instants prédéterminés étant donc espacés de ladite période; par exemple ces ajustements sont effectués à chaque trame de numéro n (modulo N), avec 0 ≤n < N. Par exemple si n est égal à 0, les ajustements sont effectués toutes les trames de numéro 0 (modulo N).

A titre d'exemple, dans chaque trame de numéro n (modulo N), les ajustements peuvent être faits lors d'un intervalle de temps prédéterminé, par exemple l'intervalle de temps IT₀. Lors des intervalles de temps suivants IT₁ à IT₁₄, chaque Node B applique la commande de contrôle de puissance dans le sens descendant qui lui est transmise par l'UE, selon la boucle interne de contrôle de puissance.

Les valeurs Pref et Période contenues dans un message reçu M sont mémorisées dans chaque Node B, pour utilisation jusqu'à nouvelle mise à jour de l'une et/ou l'autre de ces valeurs.

Pour de telles mises à jour, le RNC se base sur des paramètres qui lui sont reportés par les différents Node B, par exemple:
- la puissance d'émission instantanée, avant ajustement, pour la période d'ajustement en cours
- la puissance d'émission moyenne utilisée pendant la période d'ajustement précédente.

Le RNC peut utiliser les puissances d'émission instantanées ainsi reportées par chaque Node B pour mettre à jour la période d'ajustement. Par exemple, si les différences entre ces puissances instantanées sont élevées, le RNC peut réduire cette période; sinon, il peut augmenter cette période.

Suivant l'exemple considéré précédemment, où les ajustements sont faits dans la trame de numéro n (modulo N), la puissance d'émission instantanée avant ajustement peut être par exemple la puissance d'émission instantanée pour l'intervalle de temps IT₁₄ de la trame de numéro n-1 (modulo N).

Le RNC peut utiliser les puissances d'émission moyennes ainsi reportées par chque Node B pour mettre à jour les valeurs de puissance d'émission de référence. Il peut par exemple calculer la moyenne (ou le maximum ou le minimum) de ces puissances, et décider de signaler une valeur mise à jour de puissance de référence si la différence entre la valeur ainsi calculée et la dernière valeur signalée est trop élevée.

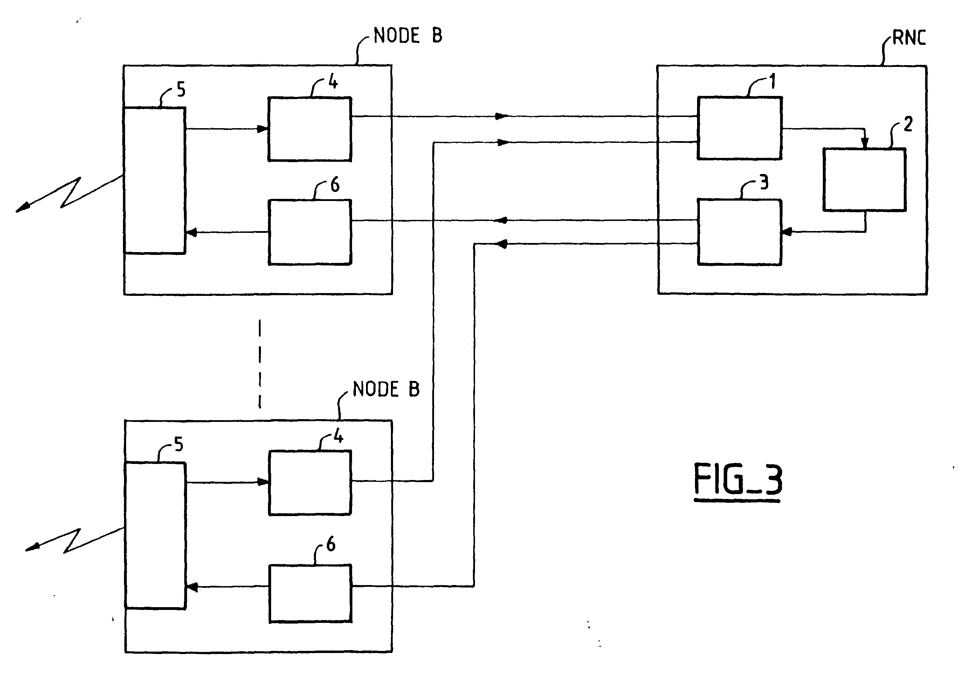

La figure 3 est un schéma destiné à illustrer un exemple de moyens à prévoir suivant l'invention dans une station de base (ou Node B dans un système tel que le système UMTS), et dans un contrôleur de stations de base (ou RNC pour un système tel que le système UMTS), pour mettre en oeuvre un procédé suivant l'invention.

Le RNC comporte ainsi:
- des moyens 1 pour recevoir des puissances d'émission reportées par différents Node B transmettant en macro-diversité,
- des moyens 2 pour déterminer, sur la base des puissances d'émission ainsi reportées, d'une part des valeurs de puissance d'émission de référence Pref pour les différents Node B, et d'autre part une valeur de période d'ajustement Période,
- des moyens 3 pour transmettre aux différents Node B un message M de contrôle de puissance dans le sens descendant, ce message contenant les valeurs Pref et Période ainsi déterminées.

Chaque Node B comporte ainsi:
- des moyens 4 pour reporter vers le RNC des valeurs de puissance d'émission émise par des moyens d'émission 5,
- des moyens 6 pour recevoir du RNC des messages de contrôle de puissance dans le sens descendant, et pour ajuster la puissance d'émission des moyens d'émission 5, en fonction des paramètres contenus dans ce message, suivant les principes décrits précédemment.

Ces différents moyens peuvent opérer suivant le procédé décrit précédemment; leur réalisation particulière ne présentant pas de difficulté particulière pour l'homme du métier, de tels moyens ne nécessitent pas d'être décrits ici de manière plus détaillée que par leur fonction.

On notera en outre que la figure 3 ne représente que schématiquement un contrôleur de stations de base et des stations de base, dans la mesure nécessaire à la compréhension de la présente invention, et sans entrer dans le détail des procédés ou protocoles de transmission et de signalisation, qui peuvent par ailleurs faire appel à des principes classiques dans ces systèmes.

En outre, d'autres exemples que ceux illustrés sur les figures décrites précédemment seraient possibles, sans sortir du cadre de la présente invention. Notamment, dans un système tel que le système UMTS, un Node B peut ne pas communiquer directement avec un RNC dit RNC serveur (ou SRNC, pour "Serving RNC" en anglais), mais par l'intermédiaire d'un autre RNC (ou DRNC, pour "Drift RNC" en anglais). Par conséquent la signalisation prévue par la présente invention ne concerne pas seulement l'interface entre RNC et Node B, mais aussi l'interface entre RNC, ces interfaces étant appelées respectivement "lub" et "lur" dans le système UMTS.

## Revendications

1. Procédé d'ajustement de puissance d'émission pour stations de base transmettant en macro-diversité dans un système de radiocommunications mobiles, ledit procédé étant **caractérisé en ce qu'**une valeur de puissance d'émission de référence pour ledit ajustement est signalée à chacune desdites stations de base, avec une période d'ajustement, et **en ce que** chacune desdites stations de base ajuste périodiquement sa puissance d'émission sur ladite valeur de puissance d'émission de référence, selon ladite période d'ajustement.

2. Procédé selon la revendication 1, **caractérisé en ce que** lesdits ajustements effectués périodiquement sont effectués à des instants prédéterminés.

3. Procédé selon la revendication 2, **caractérisé en ce que** les informations transmises étant structurées en trames numérotées suivant une numérotation continue croissante, ladite période d'ajustement est exprimée en nombre N de trames, et lesdits instants prédéterminés correspondent aux trames de numéro n (modulo N), avec 0 ≤n < N.

4. Procédé selon la revendication 3, **caractérisé en ce que**, dans chaque trame de numéro n, les ajustements sont faits lors d'un intervalle de temps prédéterminé.

5. Procédé selon l'une des revendications 1 à 4, **caractérisé en ce qu'**une valeur mise à jour de période d'ajustement peut être signalée.

6. Procédé selon l'une des revendications à 5, **caractérisé en ce qu'**une valeur mise à jour de puissance d'émission de référence peut être signalée.

7. Contrôleur de stations de base, **caractérisé en ce qu'**il comporte, pour l'ajustement de puissances d'émission par des stations de base transmettant en macro-diversité dans un système de radiocommunications mobiles:
- des moyens pour signaler une valeur de puissance d'émission de référence pour ledit ajustement, avec une période d'ajustement.

8. Contrôleur de stations de base selon la revendication 7, **caractérisé en ce qu'i**l comporte :
- des moyens pour signaler une valeur mise à jour de période d'ajustement.

9. Contrôleur de stations de base selon l'une des revendications 7 et 8, **caractérisé en ce qu'**il comporte :
- des moyens pour signaler une valeur mise à jour de puissance d'émission de référence.

10. Station de base, **caractérisée en ce qu'**elle comporte, pour l'ajustement de sa puissance d'émission dans le cas de transmission en macro-diversité dans un système de radiocommunications mobiles:
- des moyens pour recevoir une valeur de puissance d'émission de référence pour ledit ajustement, transmise par un contrôleur de stations de base avec une période d'ajustement,
- des moyens pour ajuster périodiquement sa puissance d'émission sur ladite valeur de puissance d'émission de référence, selon ladite période d'ajustement.

11. Station de base selon la revendication 10, comportant :
- des moyens pour effectuer lesdits ajustements périodiquement à des instants prédéterminés.

12. Station de base selon la revendication 11, **caractérisée en ce que**, les informations transmises étant structurées en trames numérotées suivant une numérotation continue croissante, ladite période d'ajustement est exprimée en nombre N de trames, et lesdits instants prédéterminés correspondent aux trames de numéro n (modulo N), avec 0 ≤n < N.

13. Station de base selon la revendication 12, comportant :
- des moyens pour, dans chaque trame de numéro n, effectuer lesdits ajustements lors d'un intervalle de temps prédéterminé.

14. Système de radiocommunications mobiles, pour mettre en oeuvre un procédé selon l'une des revendications 1 à 6, comprenant un contrôleur de stations de base selon l'une des revendications 7 à 9 et des stations de base selon l'une des revendications 10 à 13.

## Claims

1. A method for adjusting transmission power for base stations transmitting with macro-diversity within a mobile radio communications system, which method is **characterized in that** a reference transmission power value for said adjustment is signaled to each of said base stations, together with an adjustment period, and **in that** each of said base stations periodically adjusts its transmission power to said reference transmission power value, at said adjustment period.

2. A method according to claim 1, **characterized in that** said periodically performed adjustments are performed at predetermined moments.

3. A method according to claim 2, **characterized in that** the transmitted information being structured in the form of frames that are numbered using continuous increasing numbering, said adjustment period is expressed as a number N of frames, and said predetermined moments correspond to the frames numbered n (modulo N), where 0 ≤n < N.

4. A method according to claim 3, **characterized in that**, within each frame numbered n, the adjustments are made during a predetermined time slot.

5. A method according to one of the claims 1 to 4, **characterized in that** an updated adjustment period value may be signaled.

6. A method according to one of the claims 1 to 5, **characterized in that** an updated reference transmission power value may be signaled.

7. A base station controller, **characterized in that** it comprises, for adjusting transmission power for base stations transmitting with macro-diversity within a mobile radio communications system:
- means for signaling a reference transmission power value for said adjustment, together with an adjustment period.

8. A base station controller according to claim 7, **characterized in that** it comprises:
- means for signaling an updated adjustment period value.

9. A base station controller according to one of the claims 7 and 8, **characterized in that** it comprises:
- means for signaling an updated reference transmission power value.

10. A base station, **characterized in that** it comprises, for adjusting its transmission power when it is transmitting with macro-diversity within a mobile radio communications system:
- means for receiving a reference transmission power value for said adjustment, transmitted by a base station controller together with an adjustment period.
- means for periodically adjusting its transmission power to said reference transmission power value, at said adjustment period.

11. A base station according to claim 10, comprising:
- means for periodically performing said adjustments at predetermined moments.

12. A base station according to claim 11, **characterized in that** the transmitted information being structured in the form of frames that are numbered using continuous increasing numbering, said adjustment period is expressed as a number N of frames, and said predetermined moments correspond to the frames numbered n (modulo N), where 0 ≤n < N.

13. A base station according to claim 12, comprising:
- means for performing said adjustments, within every frame numbered n, during a predetermined time slot.

14. A mobile radio communications system for implementing a method according to one of the claims 1 to 6, comprising a base station controller according to one of the claims 7 to 9 and base stations according to one of the claims 10 to 13.

## Patentansprüche

1. Verfahren zur Sendeleistungsregelung für Basisstationen, welche im Macro-Diversity-Zustand senden, in einem mobilen Funkkommunikationssystem, wobei das besagte Verfahren **dadurch gekennzeichnet ist, dass** ein Sendeleistungs-Referenzwert für die besagte Regelung an jeder der besagten Basisstationen signalisiert wird, mit einer Regelungsperiode, und dass jede der besagten Basisstationen periodisch ihre Sendeleistung entsprechend dem besagten Sendeleistungs-Referenizwert gemäß der besagten Regelungsperiode regelt.

2. Verfahren nach Anspruch 1, **dadurch gekennzeichnet, dass** die besagten periodisch vorgenommenen Regelungen zu vorgegebenen Zeitpunkten erfolgen.

3. Verfahren nach Anspruch 2, **dadurch gekennzeichnet, dass** die übertragenen Informationen in gemäß einer fortlaufenden Nummerierung in aufsteigender Reihenfolge nummerierten Rahmen strukturiert sind, wobei die besagte Regelungsperiode in einer Anzahl von N Rahmen ausgedrückt wird, und wobei die besagten vorbestimmten Zeitpunkte den Rahmen der Nummer n (Modulo N) entsprechen, mit 0 ≤n < N.

4. Verfahren nach Anspruch 3, **dadurch gekennzeichnet, dass** die Regelungen in jedem Rahmen der Nummer n in einem vorgegebenen Zeitintervall erfolgen.

5. Verfahren nach einem der Ansprüche 1 bis 4, **dadurch gekennzeichnet, dass** ein aktualisierter Wert der Regelungsperiode signalisiert werden kann.

6. Verfahren nach einem der Ansprüche 1 bis 5, **dadurch gekennzeichnet, dass** ein aktualisierter Referenzwert der Sendeleistung signalisiert werden kann.

7. Basisstations-Controller, **dadurch gekennzeichnet, dass** er für die Regelung von Sendeleistungen durch Basisstationen, welche im Macro-Diversity-Zustand in einem mobilen Funkkommunikationssystem senden, umfasst:
- Mittel zum Signalisieren eines Sendeleistungs-Referenzwerts für die besagte Regelung, mit einer Regelungsperiode.

8. Basisstations-Controller nach Anspruch 7, **dadurch gekennzeichnet, dass** er umfasst:
- Mittel zum Signalisieren eines aktualisierten Werts der Regelungsperiode.

9. Basisstations-Controller nach einem der Ansprüche 7 und 8, **dadurch gekennzeichnet, dass** er umfasst:
- Mittel zum Signalisieren eines aktualisierten Referenzwerts der Sendeleistung.

10. Basisstation, **dadurch gekennzeichnet, dass** sie für die Regelung ihrer Sendeleistung im Fall einer Übertragung im Macro-Diversity-Zustand in einem mobilen Funkkommunikationssystem umfasst:
- Mittel zum Empfangen eines Sendeleistungs-Referenzwerts für die besagte Regelung, welcher von einem Basisstations-Controller gesendet wird, mit einer Regelungsperiode.
- Mittel zur periodischen Regelung ihrer Sendeleistung entsprechend des besagten Sendeleistungs-Referenzwerts, gemäß der besagten Regelungsperiode.

11. Basisstation nach Anspruch 10, umfassend:
- Mittel zum periodischen Ausführen der besagten Regelungen zu vorgegebenen Zeitpunkten.

12. Basisstation nach Anspruch 11, **dadurch gekennzeichnet, dass** die übertragenen Informationen in gemäß einer fortlaufenden Nummerierung in aufsteigender Reihenfolge nummerierten Rahmen strukturiert sind, wobei die besagte Regelungsperiode in einer Anzahl von N Rahmen ausgedrückt wird, und wobei die besagten vorgegebenen Zeitpunkte den Rahmen der Nummer n (Modulo N) entsprechen, mit 0 ≤n < N.

13. Basisstation nach Anspruch 12, umfassend:
- Mittel zur Ausführung der besagten Regelungen in jedem Rahmen der Nummer n in einem vorgegebenen Zeitintervall.

14. Mobiles Funkkommunikationssystem, welches einen Basisstations-Controller entsprechend einem der Ansprüche 7 bis 9 sowie Basisstationen nach einem der Ansprüche 10 bis 13 umfasst, um ein Verfahren nach einem der Ansprüche 1 bis 6 durchzuführen.
